# EUROPEAN PATENT APPLICATION

(11) **EP 4 250 100 A1**
(43) Date of publication of application: **27.09.2023**
(21) Application number: 23163895.8
(22) Date of filing: 24.03.2023
(51) Int. Cl.: G06F 9/30, G06F 8/41

(54) **PROCESSOR USING TARGET INSTRUCTIONS**

(30) Priority: 25.03.2022 US 202217704122
(71) Applicant: Nokia Solutions and Networks Oy, 02610 Espoo (FI)
(72) Inventor: Dutta, Pranjal Kumar, Sunnyvale, 94086 (US)
(74) Representative: Zinsinger, Norbert

(57) **Abstract**

Various example embodiments for supporting processor capabilities are presented herein. Various example embodiments for supporting processor capabilities may be configured to provide a processor configured to support execution of a program that is based on an instruction set architecture of the processor, where the program includes a target instruction configured to mark a beginning of an execution sequence of the program, wherein the target instruction is a target of a branch instruction of the program.

## Description

### TECHNICAL FIELD

Various example embodiments relate generally to computer systems and, more particularly but not exclusively, to processors of computer systems.

### BACKGROUND

Computer systems utilize various types of processors to perform various functions in various contexts.

### SUMMARY

In at least some example embodiments, an apparatus includes a processor, wherein the processor is configured to support execution of a program that is based on an instruction set architecture of the processor, wherein the program includes a target instruction configured to mark a beginning of an execution sequence of the program, wherein the target instruction is a target of a branch instruction of the program. In at least some example embodiments, the program that is based on the instruction set architecture of the processor is based on compilation of a second program, that is based on a high-level programming language, to form the program that is based on the instruction set architecture of the processor. In at least some example embodiments, the target instruction is inserted during compilation of the second program to form the program that is based on the instruction set architecture of the processor. In at least some example embodiments, the target instruction is inserted after compilation of the second program to form the program that is based on the instruction set architecture of the processor. In at least some example embodiments, the target instruction is inserted before the execution sequence of the program. In at least some example embodiments, a target of the branch instruction is updated from pointing to the beginning of the execution sequence to pointing to the target instruction. In at least some example embodiments, the target instruction is disposed before the execution sequence of the program. In at least some example embodiments, the branch instruction includes an unconditional branch instruction. In at least some example embodiments, the branch instruction includes a conditional branch instruction. In at least some example embodiments, a target of the branch instruction is updated from pointing to the beginning of the execution sequence to pointing to the target instruction. In at least some example embodiments, the processor is configured to, based on the target instruction, index into a cache line of the micro-operations cache that includes the target instruction and the execution sequence. In at least some example embodiments, the processor is configured to index into the cache line using an address of the target instruction. In at least some example embodiments, the processor includes a micro-operations cache, wherein the processor is configured to, based on the target instruction, index into a cache line of the micro-operations cache that includes the target instruction and the execution sequence. In at least some example embodiments, the processor includes a micro-operations cache, wherein the processor is configured to detect, during execution of the program, the branch instruction, decode the branch instruction to obtain a set of micro-operations for the branch instruction, store the set of micro-operations for the branch instruction in a first cache line of the micro-operations cache, switch the program to the beginning of the execution sequence of the program based on the branch instruction, and, based on a determination that a cache line is not found in the micro-operations cache for the target instruction, decode the target instruction to obtain a set of micro-operations for the target instruction, allocate a second cache line of the micro-operations cache, and store the micro-operations for the target instruction in the second cache line of the micro-operations cache. In at least some example embodiments, the processor includes a micro-operations cache and an execution unit, wherein the processor is configured to initiate execution of the execution sequence from the beginning of the execution sequence with execution of the target instruction and, based on a determination that the target instruction is associated with a cache line of the micro-operations cache, obtain a set of micro-operations for the execution sequence from the cache line and supply the set of micro-operations to the execution unit. In at least some example embodiments, the set of micro-operations for the execution sequence is obtained from an intermediate point in the cache line. In at least some example embodiments, the target instruction includes an opcode field encoding a value indicative of a target instruction type. In at least some example embodiments, the instruction set architecture of the processor is based on one of x86, x86-64, IA-32, IA-64, MIPS, or ARM.

In at least some example embodiments, a non-transitory computer-readable medium stores computer program code configured to cause a processor to support execution of a program that is based on an instruction set architecture of the processor, wherein the program includes a target instruction configured to mark a beginning of an execution sequence of the program, wherein the target instruction is a target of a branch instruction of the program. In at least some example embodiments, the program that is based on the instruction set architecture of the processor is based on compilation of a second program, that is based on a high-level programming language, to form the program that is based on the instruction set architecture of the processor. In at least some example embodiments, the target instruction is inserted during compilation of the second program to form the program that is based on the instruction set architecture of the processor. In at least some example embodiments, the target instruction is inserted after compilation of the second program to form the program that is based on the instruction set architecture of the processor. In at least some example embodiments, the target instruction is inserted before the execution sequence of the program. In at least some example embodiments, a target of the branch instruction is updated from pointing to the beginning of the execution sequence to pointing to the target instruction. In at least some example embodiments, the target instruction is disposed before the execution sequence of the program. In at least some example embodiments, the branch instruction includes an unconditional branch instruction. In at least some example embodiments, the branch instruction includes a conditional branch instruction. In at least some example embodiments, a target of the branch instruction is updated from pointing to the beginning of the execution sequence to pointing to the target instruction. In at least some example embodiments, the computer program code is configured to cause the processor to, based on the target instruction, index into a cache line of the micro-operations cache that includes the target instruction and the execution sequence. In at least some example embodiments, the computer program code is configured to cause the processor to index into the cache line using an address of the target instruction. In at least some example embodiments, the processor includes a micro-operations cache, and the computer program code is configured to cause the processor to, based on the target instruction, index into a cache line of the micro-operations cache that includes the target instruction and the execution sequence. In at least some example embodiments, the processor includes a micro-operations cache, and the computer program code is configured to cause the processor to detect, during execution of the program, the branch instruction, decode the branch instruction to obtain a set of micro-operations for the branch instruction, store the set of micro-operations for the branch instruction in a first cache line of the micro-operations cache, switch the program to the beginning of the execution sequence of the program based on the branch instruction, and, based on a determination that a cache line is not found in the micro-operations cache for the target instruction, decode the target instruction to obtain a set of micro-operations for the target instruction, allocate a second cache line of the micro-operations cache, and store the micro-operations for the target instruction in the second cache line of the micro-operations cache. In at least some example embodiments, the processor includes a micro-operations cache and an execution unit, and the computer program code is configured to cause the processor to initiate execution of the execution sequence from the beginning of the execution sequence with execution of the target instruction and, based on a determination that the target instruction is associated with a cache line of the micro-operations cache, obtain a set of micro-operations for the execution sequence from the cache line and supply the set of micro-operations to the execution unit. In at least some example embodiments, the set of micro-operations for the execution sequence is obtained from an intermediate point in the cache line. In at least some example embodiments, the target instruction includes an opcode field encoding a value indicative of a target instruction type. In at least some example embodiments, the instruction set architecture of the processor is based on one of x86, x86-64, IA-32, IA-64, MIPS, or ARM.

In at least some example embodiments, a method includes supporting, by a processor, execution of a program that is based on an instruction set architecture of the processor, wherein the program includes a target instruction configured to mark a beginning of an execution sequence of the program, wherein the target instruction is a target of a branch instruction of the program. In at least some example embodiments, the program that is based on the instruction set architecture of the processor is based on compilation of a second program, that is based on a high-level programming language, to form the program that is based on the instruction set architecture of the processor. In at least some example embodiments, the target instruction is inserted during compilation of the second program to form the program that is based on the instruction set architecture of the processor. In at least some example embodiments, the target instruction is inserted after compilation of the second program to form the program that is based on the instruction set architecture of the processor. In at least some example embodiments, the target instruction is inserted before the execution sequence of the program. In at least some example embodiments, a target of the branch instruction is updated from pointing to the beginning of the execution sequence to pointing to the target instruction. In at least some example embodiments, the target instruction is disposed before the execution sequence of the program. In at least some example embodiments, the branch instruction includes an unconditional branch instruction. In at least some example embodiments, the branch instruction includes a conditional branch instruction. In at least some example embodiments, a target of the branch instruction is updated from pointing to the beginning of the execution sequence to pointing to the target instruction. In at least some example embodiments, the method includes indexing, by the processor based on the target instruction, into a cache line of the micro-operations cache that includes the target instruction and the execution sequence. In at least some example embodiments, the method includes indexing, by the processor, into the cache line using an address of the target instruction. In at least some example embodiments, the processor includes a micro-operations cache, and the method includes indexing, based on the target instruction, into a cache line of the micro-operations cache that includes the target instruction and the execution sequence. In at least some example embodiments, the processor includes a micro-operations cache, and the method includes detecting, during execution of the program, the branch instruction, decoding the branch instruction to obtain a set of micro-operations for the branch instruction, storing the set of micro-operations for the branch instruction in a first cache line of the micro-operations cache, switching the program to the beginning of the execution sequence of the program based on the branch instruction, and, based on a determination that a cache line is not found in the micro-operations cache for the target instruction, decoding the target instruction to obtain a set of micro-operations for the target instruction, allocating a second cache line of the micro-operations cache, and storing the micro-operations for the target instruction in the second cache line of the micro-operations cache. In at least some example embodiments, the processor includes a micro-operations cache and an execution unit, and the method includes initiating execution of the execution sequence from the beginning of the execution sequence with execution of the target instruction and, based on a determination that the target instruction is associated with a cache line of the micro-operations cache, obtaining a set of micro-operations for the execution sequence from the cache line and supplying the set of micro-operations to the execution unit. In at least some example embodiments, the set of micro-operations for the execution sequence is obtained from an intermediate point in the cache line. In at least some example embodiments, the target instruction includes an opcode field encoding a value indicative of a target instruction type. In at least some example embodiments, the instruction set architecture of the processor is based on one of x86, x86-64, IA-32, IA-64, MIPS, or ARM.

In at least some example embodiments, an apparatus includes means for supporting, by a processor, execution of a program that is based on an instruction set architecture of the processor, wherein the program includes a target instruction configured to mark a beginning of an execution sequence of the program, wherein the target instruction is a target of a branch instruction of the program. In at least some example embodiments, the program that is based on the instruction set architecture of the processor is based on compilation of a second program, that is based on a high-level programming language, to form the program that is based on the instruction set architecture of the processor. In at least some example embodiments, the target instruction is inserted during compilation of the second program to form the program that is based on the instruction set architecture of the processor. In at least some example embodiments, the target instruction is inserted after compilation of the second program to form the program that is based on the instruction set architecture of the processor. In at least some example embodiments, the target instruction is inserted before the execution sequence of the program. In at least some example embodiments, a target of the branch instruction is updated from pointing to the beginning of the execution sequence to pointing to the target instruction. In at least some example embodiments, the target instruction is disposed before the execution sequence of the program. In at least some example embodiments, the branch instruction includes an unconditional branch instruction. In at least some example embodiments, the branch instruction includes a conditional branch instruction. In at least some example embodiments, a target of the branch instruction is updated from pointing to the beginning of the execution sequence to pointing to the target instruction. In at least some example embodiments, the apparatus includes means for indexing, by the processor based on the target instruction, into a cache line of the micro-operations cache that includes the target instruction and the execution sequence. In at least some example embodiments, the apparatus includes means for indexing, by the processor, into the cache line using an address of the target instruction. In at least some example embodiments, the processor includes a micro-operations cache, and the apparatus includes means for indexing, based on the target instruction, into a cache line of the micro-operations cache that includes the target instruction and the execution sequence. In at least some example embodiments, the processor includes a micro-operations cache, and the apparatus includes means for detecting, during execution of the program, the branch instruction, means for decoding the branch instruction to obtain a set of micro-operations for the branch instruction, means for storing the set of micro-operations for the branch instruction in a first cache line of the micro-operations cache, means for switching the program to the beginning of the execution sequence of the program based on the branch instruction, and means for, based on a determination that a cache line is not found in the micro-operations cache for the target instruction, decoding the target instruction to obtain a set of micro-operations for the target instruction, allocating a second cache line of the micro-operations cache, and storing the micro-operations for the target instruction in the second cache line of the micro-operations cache. In at least some example embodiments, the processor includes a micro-operations cache and an execution unit, and the apparatus includes means for initiating execution of the execution sequence from the beginning of the execution sequence with execution of the target instruction and means for, based on a determination that the target instruction is associated with a cache line of the micro-operations cache, obtaining a set of micro-operations for the execution sequence from the cache line and supplying the set of micro-operations to the execution unit. In at least some example embodiments, the set of micro-operations for the execution sequence is obtained from an intermediate point in the cache line. In at least some example embodiments, the target instruction includes an opcode field encoding a value indicative of a target instruction type. In at least some example embodiments, the instruction set architecture of the processor is based on one of x86, x86-64, IA-32, IA-64, MIPS, or ARM.

In at least some example embodiments an apparatus comprises a processor, wherein the processor is configured to detect, within a program that is based on an instruction set architecture of the processor, a branch instruction configured to point to a beginning of an execution sequence of the program, and wherein the processor is configured to insert, within the program before the beginning of the execution sequence of the program based on the branch instruction, a target instruction configured to mark the beginning of the execution sequence of the program.

### BRIEF DESCRIPTION OF THE DRAWINGS

The teachings herein can be readily understood by considering the following detailed description in conjunction with the accompanying drawings, in which:
FIG. 1 depicts an example embodiment of computing system including a processor and a memory for illustrating an instruction pipeline supported by the processor;
FIG. 2 depicts an example embodiment of a program for illustrating caching of instructions of the program in a micro-operations cache of a processor;
FIGs. 3A - 3G depict example embodiments of micro-operations cache lines in a micro-operations cache of a processor for the program of FIG. 2;
FIG. 4 depicts an example embodiment of a program including Target Instructions for improving caching of instructions of the program in a micro-operations cache of a processor;
FIG. 5 depicts an example embodiment of an x86 instruction format configured for use in providing a Target Instruction for improving caching of instructions of a program in a micro-operations cache of a processor;
FIGs. 6A - 6C depict example embodiments of aspects of the x86 instruction format of FIG. 5;
FIG. 7 depicts an example embodiment of a Target Instruction format based on the x86 instruction format of FIG. 5;
FIG. 8 depicts an example embodiment of a method for generation of an ISA program including target instructions based on insertion of target instructions during translation of a high-level program into the ISA program;
FIG. 9 depicts an example embodiment of a method for generation of an ISA program including target instructions based on insertion of target instructions after translation of a high-level program into the ISA program;
FIG. 10 depicts an example embodiment of a method for insertion of target instructions into an ISA program;
FIG. 11 depicts an example embodiment of a method for supporting use of a target instruction by a processor;
FIG. 12 depicts an example embodiment of a method for supporting use of a target instruction by a processor; and
FIG. 13 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting processor capabilities are presented herein. Various example embodiments for supporting processor capabilities may be configured to provide a processor configured to support execution of a program that is based on an instruction set architecture (ISA) of the processor, where the program includes a target instruction configured to mark a beginning of an execution sequence of the program, wherein the target instruction is a target of a branch instruction. Various example embodiments for supporting processor capabilities may be configured to provide a processor configured to support execution of a program that is based on an ISA of the processor, where the program includes a target instruction configured to mark a beginning of an execution sequence of the program, wherein the target instruction is a target of a branch instruction, such that the target instruction may be used by the processor during execution of the program that is based on the ISA of the processor for controlling the execution sequence of the program that is based on the ISA of the processor. It will be appreciated that these and various other example embodiments and advantages or potential advantages of example embodiments for supporting processor capabilities may be further understood by way of reference to the various figures, which are discussed further below.

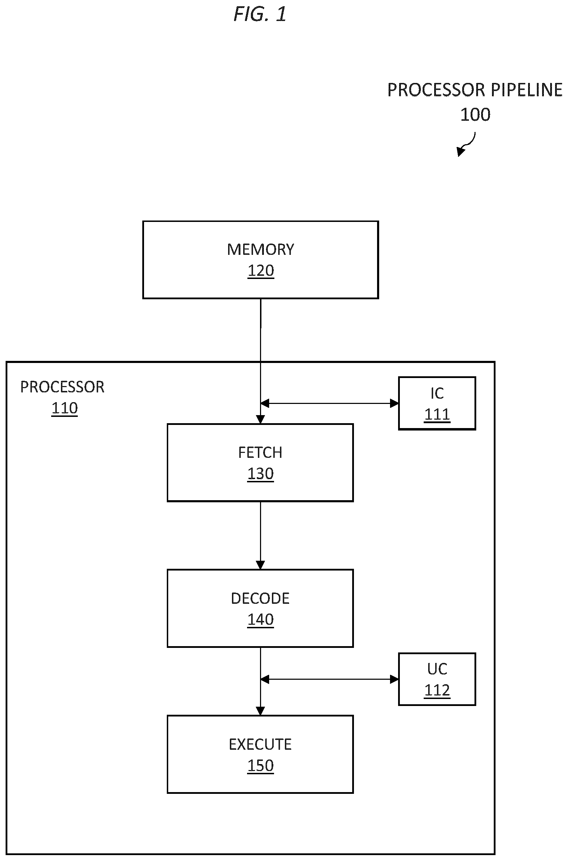

FIG. 1 depicts an example embodiment of computing system including a processor and a memory for illustrating an instruction pipeline supported by the processor.

The computing system 100 includes a processor 110 and a memory 120. The processor 110 includes an instruction cache (IC) 111 and a micro-operations cache (UC) 112. The high level stages in the pipeline supported by the processor 110 include a fetch stage 130, a decode stage 140, and an execution stage 150.

In the processor 110, the format and encoding of the instructions in a program is determined by the Instruction Set Architecture (ISA) of the processor 110. For example, some well-known ISAs include x86/x86-64, IA-32/IA-64, MIPS, ARM, and so forth; however, the micro-architecture of a processor cannot execute the instructions of an ISA in their native form because of their complexity. An ISA is designed to offer sophisticated operations which, in turn, also keep the program compact, i.e., reduces the foot print of a program in the memory. It is noted that the optimal footprint of a program in memory is particularly important for optimal use of the IC. A majority of ISAs offer variable-length instructions, which further adds to the complexity of execution. So, at the micro-architectural level of a processor, instructions are represented by fixed length simpler micro-operations (generally referred to as "micro-ops" or "UOPs"). An ISA instruction is broken down into one or more fixed-length UOPs. UOPs perform basic operations on data stored in one or more registers, including transferring data between registers or between registers and external buses, and performing arithmetic and logical operations on registers. For example, an add-register-to-memory ISA instruction performs addition of the value in a register X to the value in a memory location M. The instruction is broken down into a sequence of three separate UOPs as follows: (1) load from M to a register Y, (2) add Y to X, and (3) store X to M.

In the processor 110, execution of a program is based on pipeline which, as indicated above, includes the fetch stage 130, the decode stage 140, and the execution stage 150. The fetch stage 130 retrieves a block of instructions of a program from memory 120 or IC 111. The IC 111 is located on board the processor 110. The IC 111 is generally much smaller in size (e.g., 32KB, 64KB, 128KB, or the like) than the memory 120 and, thus, much faster than the memory 120. The IC 111 caches blocks of instructions fetched from the memory 120. If a set of instructions is repeatedly fetched then those instructions are likely available in the IC 111, so a hit in the IC 111 reduces the time to fetch instructions (as compared with fetching the instructions from the memory 120). The IC 111 is agnostic of syntax and semantics of instructions and caches in units of memory blocks, i.e., all instructions in a certain range of addresses in memory 120. The processor 110 fetches a block of instructions from the memory 120 only if the block is not found in the IC 111. In the IC 111, a memory block is identified by the first memory address in the memory block. In the decode stage 140, instructions fetched during the fetch stage 130 are dynamically decoded by the processor 110 to the native UOPs of the instructions. This dynamic decoding also provides a cleaner separation of the "stable" and "standardized" ISA from the underlying micro-architecture of the processor that is free to define its own UOP set. As a result, a program that has been written for an ISA can run on different micro-architectures supporting that ISA. This has enabled program compatibility between different generations of processors to be easily achieved. For example, different micro-architectures can support the same ISA, but each can define their own native UOP set. The execute stage 150 executes the UOPs supplied by the decode stage 140.

In the processor 110, the fetch stage 130 and the decode stage 140 generally are costly in terms of clock cycles as well as power consumption. So, many modern processors implement another instruction cache, typically referred to as a micro-op cache (UC) or decoded stream buffer (DSB), which stores the already decoded UOPs. This is illustrated as the UC 112 of the processor 110. When the processor 110 needs to execute an instruction and its decoded UOPs already exists in the UC 112, then the UC 112 can directly supply the UOPs to the execution unit. The UC 112 is generally much smaller in size (e.g. 1.5KB, 2KB, 3KB, or the like) than the IC 111 and the memory 120 and, thus, much faster than the IC 111 and the memory 120 (typically operating at the clock speed of the processor 110). A hit in UC 112 eliminates the fetch stage 130 and the decode stage 140, both of which are costly, thereby improving the performance and power budget of the processor 110. An instruction is fetched and decoded only if it is a miss in the UC 112, otherwise the fetch stage 130 and the decode stage 140 can be powered off. It is noted that, although omitted from FIG. 1 for purposes of clarity, some processors may use a component called a Trace Cache (TC) instead of a UC, where a TC is simpler than a UC since a TC is a single large block including all instructions or UCs of a control flow.

The UC 112 stores the UOPs received from the decode stage 140 in smaller sized blocks, but in the sequential order of execution. This means that each branch, conditional or unconditional, makes the processor 110 start with a new UC line even if the current UC line is not yet filled. This simple rule allows high bandwidth fetching from the UC 112 since, once there is a hit in UC 112, then the entire UC line can be supplied to the execution stage 150 without worrying about a change of execution sequence in the middle of a UC line. Herein, unless indicated otherwise, an address of an instruction in memory is referred to as an Instruction Pointer (IP). A UC line is identified by the IP of the parent instruction of the first UOP in the UC line; other than that no correlation exists between the UOPs in a UC line and their corresponding parent instructions, and it is noted that such correlation is not required since the entire UC line is supplied to the execution stage 150. As a result, UOPs in a UC line cannot be looked up by the IPs of their parent instructions.

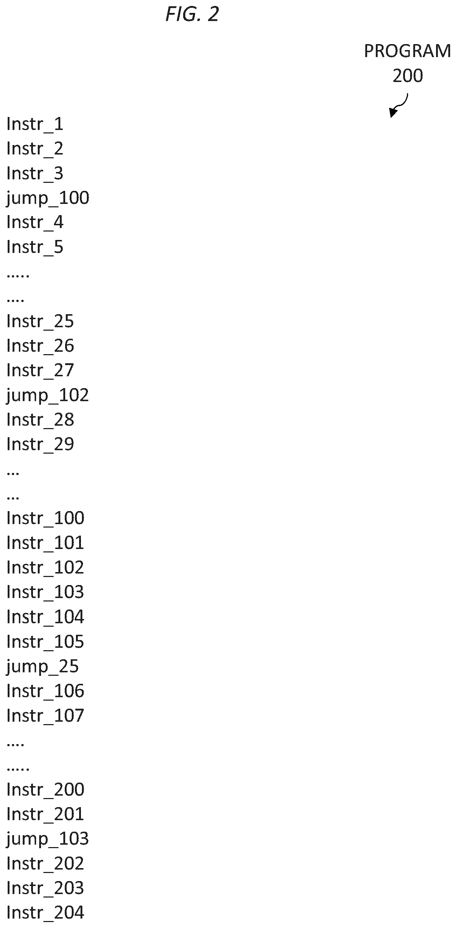

FIG. 2 depicts an example embodiment of a program for illustrating caching of instructions of the program in a micro-operations cache.

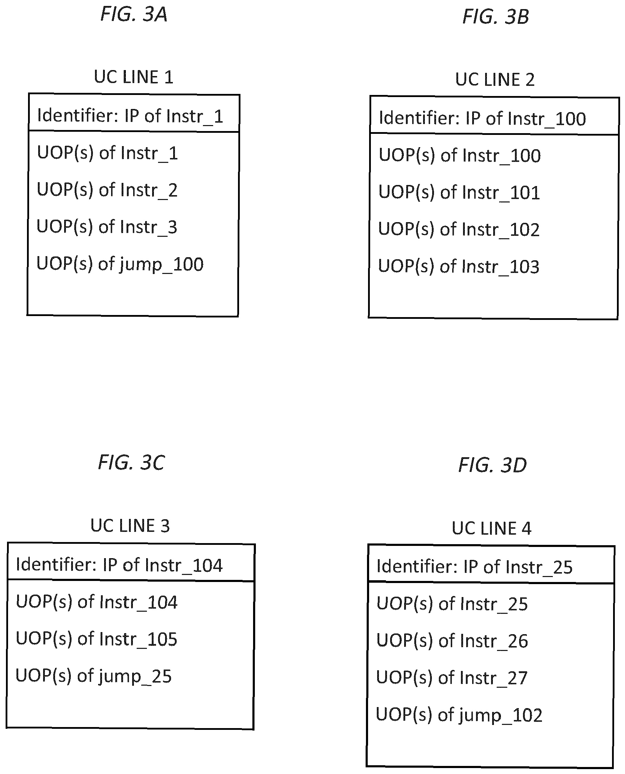

The program 200 of FIG. 2 includes a set of instructions. The size of an instruction can vary, ranging from one byte to multiples of bytes. A first execution sequence (of instructions) can be switched to a second execution sequence (of instructions) by a branch instruction, which may be a conditional branch instruction or an unconditional branch instruction. A typical program has a branch instruction in every 6 instructions. For simplicity and without the loss of generality, the program 200 of FIG. 2 illustrates only unconditional branch instructions (denoted as jump_xx). The construction of the UC lines in the UC as the instructions of the program 200 are fetched and decoded by the processor is illustrated with respect to FIGs. 3A - 3G.

FIGs. 3A - 3G depict example embodiments of micro-operations cache lines in a micro-operations cache of a processor for the program of FIG. 2.

The processor starts execution from Instr_1 of program 200. Initially, there are no valid lines in the UC (i.e., the UC is empty). Since no UC line is found for the IP of Instr_1, the processor starts fetching and decoding from Instr1 and allocates a new UC line for storing the decoded UOPs. The unconditional jump instruction jump_100 switches the execution sequence to start from instr_100. So, the instructions of the instruction sequence from Instr_1 to jump_100 are decoded and stored in a new UC line, referred to as UC Line 1. The UC Line 1 is identified by the IP of Instr_1. The UC Line 1 is depicted in FIG. 3A.

The processor, after jump_100, starts execution from Instr_100. Since no UC line is found for the IP of Instr_100, the processor starts fetching and decoding from Instr_100 and allocates a new UC line for storing the decoded UOPs. After decoding Instr_103, the UC line is full. So, the instructions of the instruction sequence from Instr_100 to Instr_103 are decoded and stored in the new UC line, referred to as UC Line 2. The UC Line 2 is identified by IP of Instr_100. The UC Line 2 is depicted in FIG. 3B.

The processor then starts execution from Instr_104. Since no UC line is found for the IP of Instr _104, the processor starts fetching and decoding from Instr_104 and allocates a new UC line for storing the decoded UOPs. After decoding jump_25, the processor switches the execution sequence to start from Instr_25. So, the instructions of the instruction sequence from Instr_104 to jump _25 are decoded and stored in the new UC line, referred to as UC Line 3. The UC Line 3 is identified by IP of Instr_104. The UC Line 3 is depicted in FIG. 3C.

The processor then starts execution from Instr_25. Since no UC line is found for the IP of Instr_25, the processor starts fetching and decoding from Instr_25 and allocates a new UC line for storing the decoded UOPs. After decoding jump_102, the processor switches the execution sequence to start from Instr_102. So, the instructions of the instruction sequence from Instr_25 to jump_102 are decoded and stored in the new UC line, referred to as UC Line 4. The UC Line 4 is identified by IP of Instr_25. The UC Line 4 is depicted in FIG. 3D.

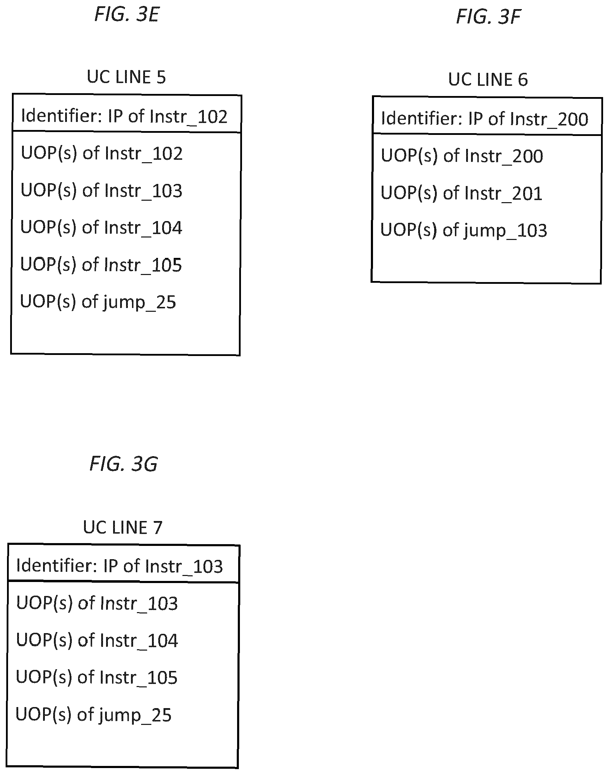

The processor then starts execution from Instr_102. Since no UC line is found for the IP of Instr _102, the processor starts fetching and decoding from Instr_102 and allocates a new UC line for storing the decoded UOPs. After decoding jump_25, the processor switches the execution sequence to start from Instr_25. So, the instructions of the instruction sequence from Instr_102 to jump _25 are decoded and stored in the new UC line, referred to as UC Line 5. The UC Line 5 is identified by IP of Instr_102. The UC Line 5 is depicted in FIG. 3E.

The processor then starts execution from Instr_25. The processor already finds the UC Line 4 identified by the IP of Instr_25, so the entire UC Line 4 is directly supplied to the execution unit.

The processor, for the sake of example, then starts executing another sequence starting at instruction Instr_200. Since no UC line is found for the IP of Instr_200, the processor starts fetching and decoding from Instr_200 and allocates a new UC line for storing the decoded UOPs. After decoding jump_103, the processor switches the execution sequence to start from Instr_103. So, the instructions of the instruction sequence from Instr_200 to jump_103 are decoded and stored in the new UC line, referred to as UC Line 6. The UC Line 6 is identified by IP of Instr_200. The UC Line 6 is depicted in FIG. 3F.

The processor then starts execution from Instr_103. Since no UC line is found for the IP of Instr _103, the processor starts fetching and decoding from Instr_103 and allocates a new UC line for storing the decoded UOPs. After decoding jump_25, the processor switches the execution sequence to start from Instr_25. So, the instructions of the instruction sequence from Instr_103 to jump _25 are decoded and stored in the new UC line, referred to as UC Line 7. The UC Line 7 is identified by IP of Instr_103. The UC Line 7 is depicted in FIG. 3G.

While a processor is executing a program such as the program 200, the UC suffers from conflict misses when P frequently accessed UC lines map to the same set Si, and the cache associativity N is less than P. In that case, one of the valid UC lines in the set Si needs to be evicted out to accommodate a newer UC line. It will be appreciated that the higher the associativity the less conflict misses the UC will suffer, whereas, on the other hand, the more ways the UC has then the bigger the way multiplexor becomes and this may affect the cycle time of the processor. In the examples of UC Lines depicted in FIGs. 3A-3F, it may be seen that UC Line 2, UC Line 3, UC Line 5, and UC 7 have the UOPs of more than 50% overlapping instructions. The UC Line 5 includes all of the sequences in UC Line 3 and in UC Line 7. Since the UC is much smaller in size, such overlaps among the UC lines lead to inefficient utilization of the UC, which in turn can increase conflict misses and capacity misses in the UC. Additionally, cycles are wasted by the processor in fetching and decoding instructions that already exist at an offset in a UC line. Various example embodiments are configured to support efficient utilization of a processor cache (e.g. UC, TC, or the like) of a processor by reducing or eliminating such duplication of instructions in the processor cache of the processor. Various example embodiments are configured to support efficient utilization of a processor cache of a processor in a manner supporting delivery of UOPs to the execution unit at the clock speed of the processor.

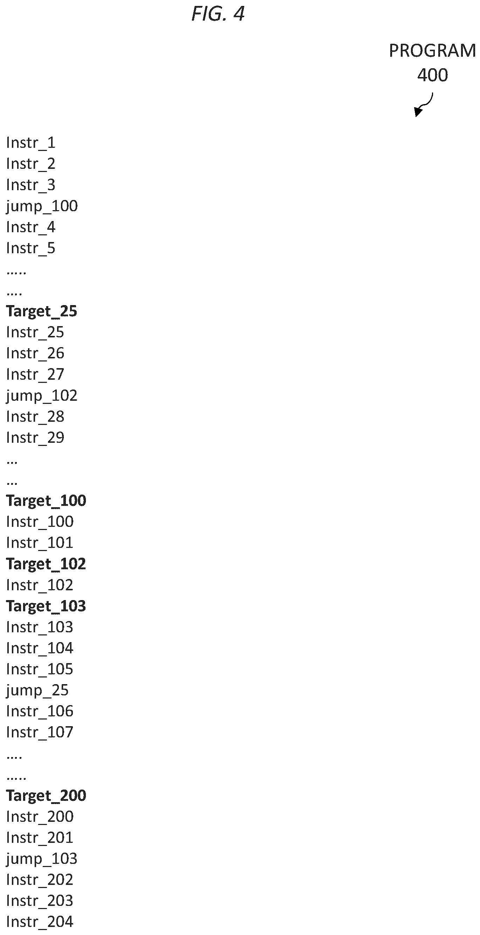

Various example embodiments are configured to support efficient utilization of a processor cache (e.g. UC, TC, or the like) of a processor by reducing or eliminating duplication of instructions among cache lines of the processor cache of the processor. The reduction or elimination of duplicate instructions among cache lines of a processor cache of a processor may be based on introduction of Target Instructions into an ISA of the processor. The concept of a Target Instruction may be implemented by any ISA (e.g., x86/x86-64, IA-32/IA-64, MIPS, ARM, or the like). The Target Instruction may be inserted into a program before an execution sequence that is the target of a branch instruction (e.g., a condition branch instruction or an unconditional branch instruction). Here, "before" may be considered to be immediately preceding a first instruction of the execution sequence that is the target of the branch instruction. The Target Instruction may be automatically inserted into the program by a compiler while the compiler (e.g., GNU Compiler Collection (GCC), Low Level Virtual Machine (LLVM), or the like) is translating the program, which is written in a high level programming language, to the ISA instructions supported by the ISA of the processor. The Target Instruction works as a marker within the program, which may be used by the processor to index into a cache line of a processor cache of the processor not only by the address of its starting instruction but also by the Target Instruction included in the cache line of the processor cache of the processor, thereby enabling the processor to reduce or eliminate duplication of instructions among cache lines in the processor cache of the processor. An example of use of Target Instructions in the program 200 of FIG. 2 is presented in the program 400 of FIG. 4. It is noted that introduction of Target Instructions into an ISA enables support for alternate designs of processor caches (e.g., UCs, TCs, or the like). Various example embodiments are configured to support efficient utilization of a processor cache of a processor in a manner supporting delivery of UOPs to the execution unit at the clock speed of the processor.

Various example embodiments may be configured to support use of target instructions to reduce or eliminate duplication of instructions among cache lines in the processor cache of the processor. The use of target instructions, as indicated above, may be supported within various ISAs, such as x86/x86-64, IA-32/IA-64, MIPS, ARM, or the like. It will be appreciated that the use of target instructions to reduce or eliminate duplication of instructions among cache lines in the processor cache of the processor may be further understood by further considering the use of target instructions within a particular ISA and, thus, various example embodiments are primarily presented herein within the context of implementation of target instructions within the x86 ISA; however, it also will be appreciated that various example embodiments presented herein within the context of implementation of the target instructions within the x86 ISA may be configured or adapted to support implementation of target instructions within various other ISAs (e.g., IA-32/IA-64, MIPS, ARM, or the like).

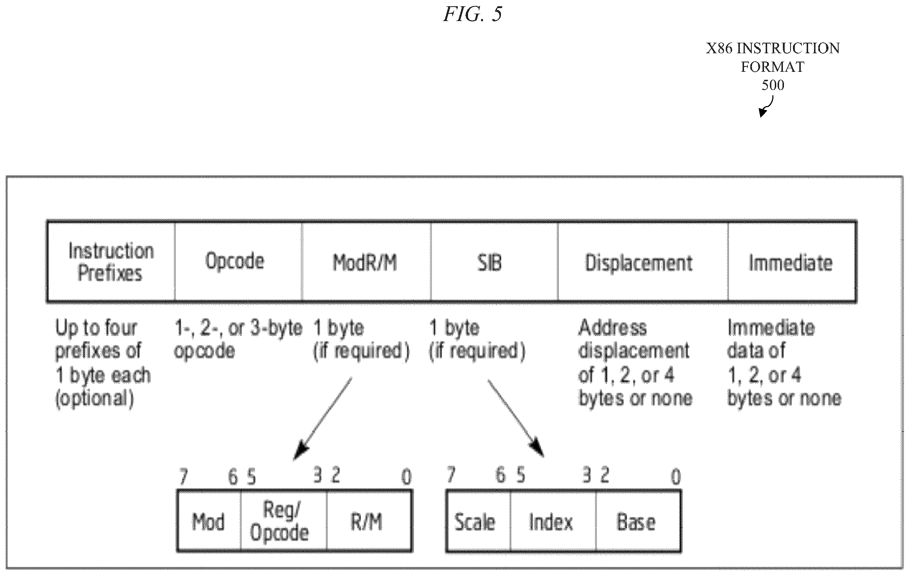

FIG. 5 depicts an example embodiment of an x86 instruction format configured for use in providing a Target Instruction for improving caching of instructions of a program in a micro-operations cache of a processor.

The x86 instruction format 500 includes an Instruction Prefixes field, an Opcode field, a Mode-Register-Memory (ModR/M) field, a Scale-Index-Base (SIB) field, a Displacement field, and an Immediate field.

The Opcode field is a single byte denoting the basic operation of the instruction. Thus, this field is required and allows up to 256 primary op code maps. For example, 0x74 is the opcode for the JE instruction for short jumps (i.e., a conditional jump to a location within a relative offset of 0x7f in program memory). Alternate opcode maps are defined using escape sequences, which requires 2-3 bytes in the opcode field. For example, an escape sequence is a 2-byte opcode encoded as [0f <opcode>] where, here, 0f identifies the alternate opcode map. For example, 0f 84 is the opcode for the JE instruction for near jumps (i.e., a conditional jump to a location that is too far away for a short jump to reach).

The ModR/M field is a 1-byte optional field. If the instruction has an operand (i.e., based on the Opcode), then this field specifies the operand(s) and their addressing mode. The bits in this field are divided into the following: (a) Mod in bits 6-7, (b) Reg/Opcode in bits 3-5, and (c) R/M in bits 0-2.

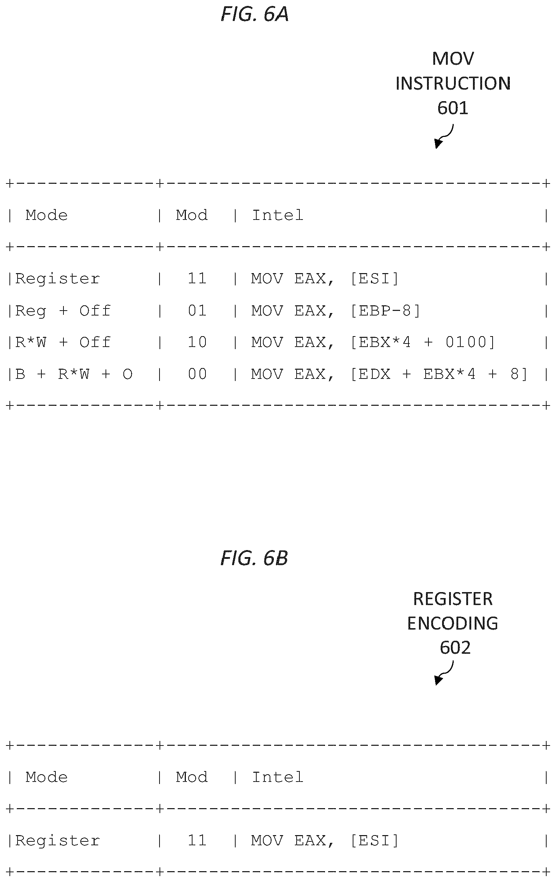

The Mod bits of the ModR/M field (bits 6-7) describe the four addressing modes for memory operand, which are illustrated in FIG. 6A in the context of a MOV instruction. The MOV instruction 601 of FIG. 6A transfers data between memory and register EAX.

The Reg bits of the ModR/M field (bits 3-5) specify the source or destination register. This allows encoding of the eight general purpose registers in the x86 architecture.

The R/M bits of the ModR/M field (bits 0-2) field, combined with the Mod field, specify either the only operand in a single operand instruction (e.g., NOT or NEG) or the second operand in a two operand instruction. In the case of the two operand instruction, the R/M bits would encode the ESI register and the EAX register would be encoded in the Reg field. An example is illustrated in FIG. 6B. The register encoding 602 of FIG. 6B is for register EAX (which may be used for transfers of data between memory and register EAX as in the MOV instruction 601 of FIG. 6A).

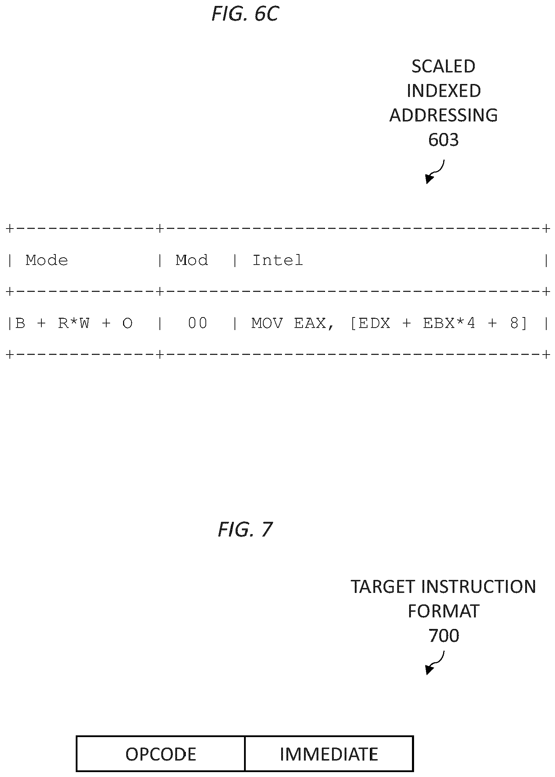

The SIB field is a 1-byte optional field that is used for a scaled indexed addressing mode (specified in Mod). An example is illustrated in FIG. 6C. The scaled indexed addressing 603 of FIG. 6C may be used for transfers of data between memory and register EAX as in the MOV instruction 601 of FIG. 6A. In the scaled indexed addressing 603 of FIG. 6C, Scale = 4 (the scale factor), Index = EBX (the register including the index portion), and Base = EDX (the register including the base portion).

The Displacement field is a variable length field (of 1, 2, or 4 bytes) that has multiple use cases. In the example described for SIB, this field contains the non-zero offset value 8. In control instructions, this field contains the address of a control block in program memory in either the absolute value (i.e., added to the base of program memory address) or the relative value (i.e., offset from the address of the control instruction).

The Immediate field is a variable length field that contains a constant operand of an instruction. For example, consider the following instruction that adds 8 to register EAX: MOV EAX, 8. In this example, the Immediate field contains the value 8.

The Instruction Prefixes filed is a variable length field that can contain up to 4 prefixes where each prefix is a 1-byte field. This field changes the default operation of x86 instructions. For example, 66h is an "Operand Override" prefix which changes the size of data expected by default mode of instruction (e.g., 64-bit to 16-bit). The x86 ISA currently supports the following prefixes: (1) Prefix Group 1 including (1a) 0xF0: LOCK prefix, (1b) 0xF2: REPNE/REPNZ prefix, and (1c) 0xF3: REP or REPE/REPZ prefix, (2) Prefix Group 2 including (2a) 0x2E: CS segment override, (2b) 0x36: SS segment override, (2c) 0x3E: DS segment override, (2d) 0x26: ES segment override, (2e) 0x64: FS segment override, (2f) 0x65: GS segment override, (2g) 0x2E: Branch not taken, and (2h) 0x3E: Branch taken, (3) Prefix Group 3 including (3a) 0x66: Operand-size override prefix, and (4) Prefix Group 4 including (4a) 0x67: Address-size override prefix.

FIG. 7 depicts an example embodiment of a Target Instruction format based on the x86 instruction format of FIG. 5. In FIG. 7, the Target Instruction 700, which is based on an x86 ISA, includes the Opcode and Immediate fields. The Opcode field may include a 1-byte, 2-byte, or 3-byte opcode. It will be appreciated that, since this a newly defined instruction type, a currently unassigned value from existing Opcode maps will be allocated to indicate that an instruction is a Target Instruction. The Immediate field is a 1-byte field, which may be encoded with a value of 0.

It will be appreciated that various example embodiments presented herein within the context of implementation of the target instructions within the x86 ISA may be configured or adapted to support implementation of target instructions within various other ISAs (e.g., IA-32/IA-64, MIPS, ARM, or the like).

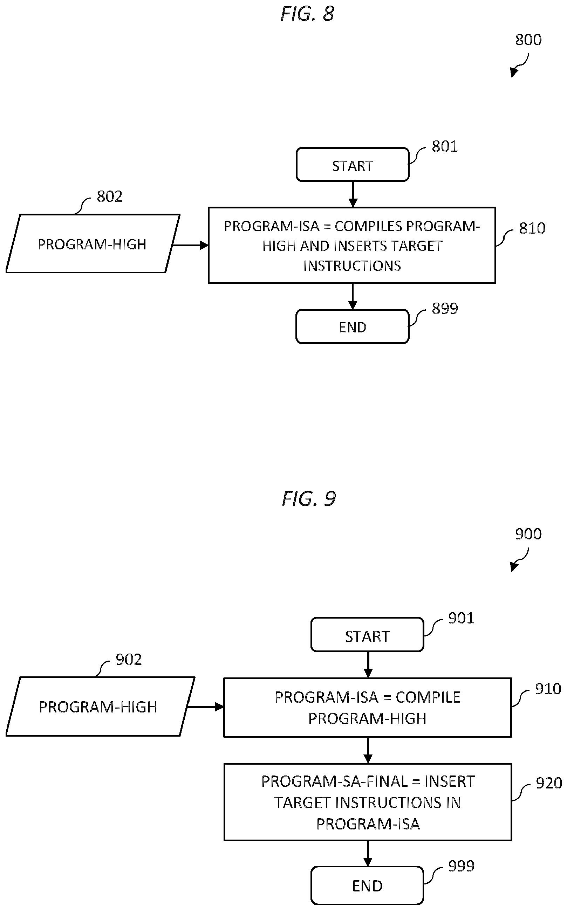

FIG. 8 depicts an example embodiment of a method for generation of an ISA program including target instructions based on insertion of target instructions during translation of a high-level program into the ISA program. At block 801, the method 800 begins. The input to method 800, as indicated by block 802, is a program written in a high-level programming language (denoted as Program-High). For example, the high-level programming language may be C, C++, or the like. At block 810, the program written in the high-level programming language is compiled to form a program that includes ISA instructions (denoted as Program-ISA). For example, the program written in the high-level programming language may be compiled to form the program that includes ISA instructions based on compilers such as GCC, LLVM, or the like. Here, the compiler supports generation of Target Instructions so, during the compilation process, the compiler inserts Target Instructions into relevant places within the program that includes ISA instructions. At block 899, the method 800 ends.

FIG. 9 depicts an example embodiment of a method for generation of an ISA program including target instructions based on insertion of target instructions after translation of a high-level program into the ISA program. At block 901, the method 900 begins. The input to method 900, as indicated by block 902, is a program written in a high-level programming language (denoted as Program-High). For example, the high-level programming language may be C, C++, or the like. At block 910, the program written in the high-level programming language is compiled to form a program that includes ISA instructions (denoted as Program-ISA). For example, the program written in the high-level programming language may be compiled to form the program that includes ISA instructions based on compilers such as GCC, LLVM, or the like. At block 920, Target Instructions are inserted into relevant places within the program that includes ISA instructions. The Target Instructions may be inserted after the compilation process if the compiler does not support generation of Target Instructions. The Target Instructions may be inserted using a process configured to insert Target Instructions into the program that includes ISA instructions. At block 999, the method 900 ends.

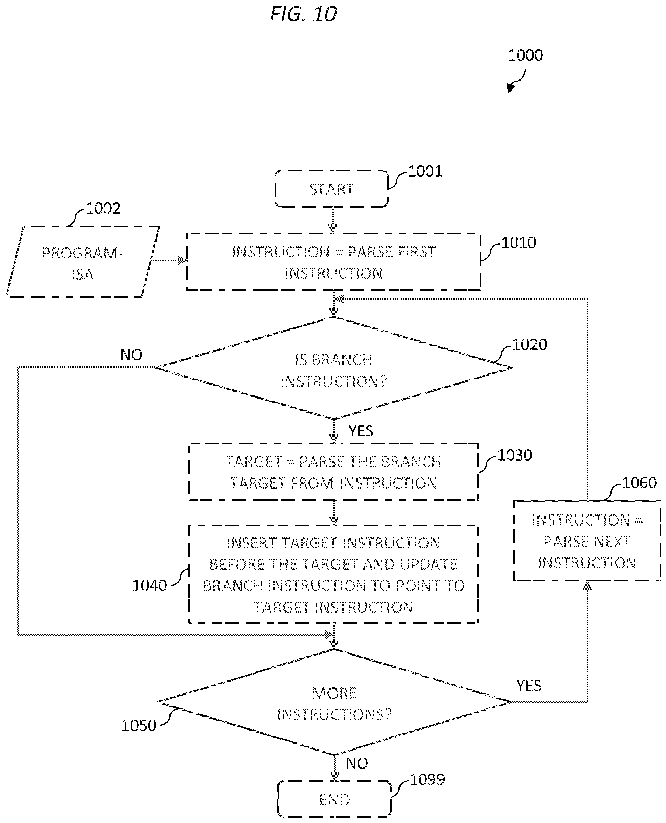

FIG. 10 depicts an example embodiment of a method for insertion of target instructions into an ISA program. It will be appreciated that the method 1000 of FIG. 10 may be used to provide block 810 of FIG. 8 or block 920 of FIG. 9. At block 1001, the method 1000 begins. The input to method 1000, as indicated by block 1002, is a program that includes ISA instructions (denoted as Program-ISA). It will be appreciated that the program that includes ISA instructions may be in the process of being generated from a program based on a high-level programming language (e.g., as in method 800 of FIG. 8) or may have already been generated from a program based on a high-level programming language (e.g., as in method 900 of FIG. 9). At block 1010, the first instruction in ISA-Program is parsed. At block 1020, a determination is made as to whether the instruction that was parsed is a branch instruction (e.g., a conditional branch instruction or an unconditional branch instruction). If the instruction that was parsed is a branch instruction, then the method 1000 proceeds to block 1030. If the instruction that was parsed is not a branch instruction, then the method 1000 proceeds to block 1050. At block 1030, the target from the branch instruction is parsed. The target is the identification of an instruction to which the branch can jump (i.e., switch the execution sequence to the target). At block 1040, a Target Instruction is inserted within the Program-ISA before the target (i.e., before the first instruction of the execution sequence that is the target of the branch instruction) and the target of the branch instruction is updated to point to the target instruction. At block 1050, a determination is made as to whether there are more instructions in Program-ISA to be parsed. If there are no more instructions in Program-ISA to be parsed, the method 1000 proceeds to block 1099, where the method 1000 ends. If there are more instructions in Program-ISA to be parsed, the method 1000 proceeds to block 1060. At block 1060, the next instruction in ISA-Program is parsed. From block 1060, the method 1000 returns to block 1020. At block 1099, the method 1000 ends.

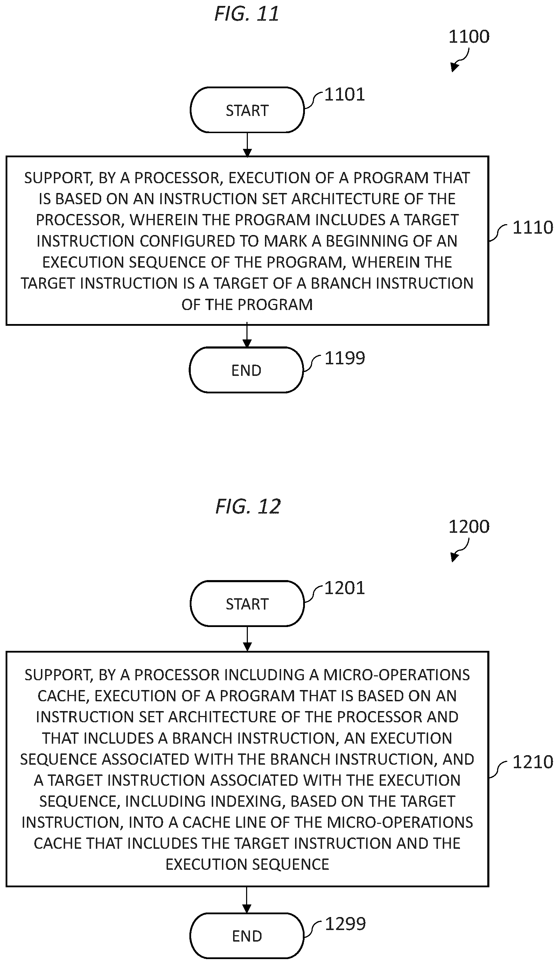

FIG. 11 depicts an example embodiment of a method for supporting use of a target instruction by a processor. It will be appreciated that, although primarily presented as being performed serially, at least a portion of the blocks of method 1100 may be performed contemporaneously or in a different order than as presented in FIG. 11. At block 1101, the method 1100 begins. At block 1110, support, by a processor, execution of a program that is based on an instruction set architecture of the processor, wherein the program includes a target instruction configured to mark a beginning of an execution sequence of the program, wherein the target instruction is a target of a branch instruction of the program. At block 1199, the method 1100 ends.

FIG. 12 depicts an example embodiment of a method for supporting use of a target instruction by a processor. It will be appreciated that, although primarily presented as being performed serially, at least a portion of the blocks of method 1200 may be performed contemporaneously or in a different order than as presented in FIG. 12. At block 1201, the method 1200 begins. At block 1210, support, by a processor including a micro-operations cache, execution of a program that is based on an instruction set architecture of the processor and that includes a branch instruction, an execution sequence associated with the branch instruction, and a target instruction associated with the execution sequence, including indexing, based on the target instruction, into a cache line of the micro-operations cache that includes the target instruction and the execution sequence. At block 1299, the method 1200 ends.

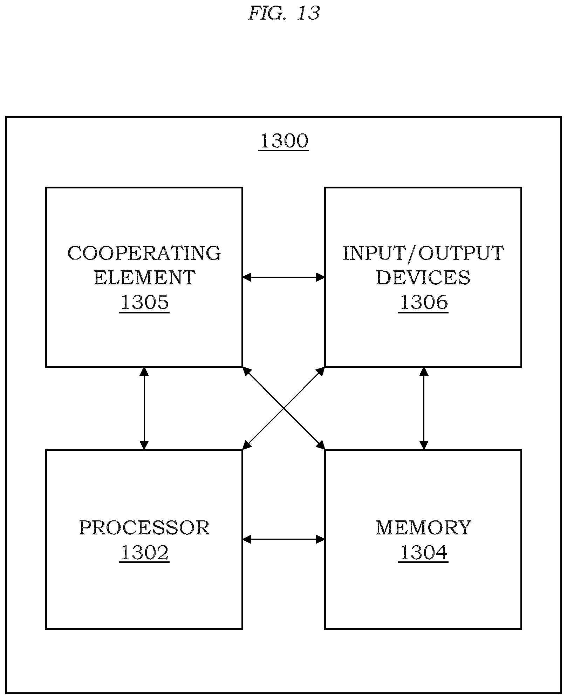

FIG. 13 depicts an example embodiment of a computer suitable for use in performing various functions presented herein.

The computer 1300 includes a processor 1302 (e.g., a central processing unit (CPU), a processor, a processor having a set of processor cores, a processor core of a processor, or the like) and a memory 1304 (e.g., a random access memory, a read only memory, or the like). The processor 1302 and the memory 1304 may be communicatively connected. In at least some example embodiments, the computer 1300 may include at least one processor and at least one memory including computer program code, wherein the at least one memory and the computer program code are configured to, with the at least one processor, cause the computer to perform various functions presented herein.

The computer 1300 also may include a cooperating element 1305. The cooperating element 1305 may be a hardware device. The cooperating element 1305 may be a process that can be loaded into the memory 1304 and executed by the processor 1302 to implement various functions presented herein (in which case, for example, the cooperating element 1305 (including associated data structures) can be stored on a non-transitory computer-readable storage medium, such as a storage device or other suitable type of storage element (e.g., a magnetic drive, an optical drive, or the like)).

The computer 1300 also may include one or more input/output devices 1306. The input/output devices 1306 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 1300 may represent a general architecture and functionality suitable for implementing functional elements described herein, portions of functional elements described herein, or the like, as well as various combinations thereof. For example, computer 1300 may provide a general architecture and functionality that is suitable for implementing one or more elements presented herein, such as a node or a portion thereof, a controller or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
a processor, wherein the processor is configured to support execution of a program that is based on an instruction set architecture of the processor, wherein the program includes a target instruction configured to mark a beginning of an execution sequence of the program, wherein the target instruction is a target of a branch instruction of the program.

2. The apparatus according to claim 1, wherein the program that is based on the instruction set architecture of the processor is based on compilation of a second program, that is based on a high-level programming language, to form the program that is based on the instruction set architecture of the processor.

3. The apparatus according to claim 2, wherein the target instruction is inserted during compilation of the second program to form the program that is based on the instruction set architecture of the processor.

4. The apparatus according to claim 2, wherein the target instruction is inserted after compilation of the second program to form the program that is based on the instruction set architecture of the processor.

5. The apparatus according to claim 2, wherein the target instruction is inserted before the execution sequence of the program.

6. The apparatus according to any of claims 1 to 5, wherein the target instruction is disposed before the execution sequence of the program.

7. The apparatus according to any of claims 1 to 6, wherein the branch instruction includes an unconditional branch instruction.

8. The apparatus according to any of claims 1 to 6, wherein the branch instruction includes a conditional branch instruction.

9. The apparatus according to any of claims 1 to 8, wherein a target of the branch instruction is updated from pointing to the beginning of the execution sequence to pointing to the target instruction.

10. The apparatus according to any of claims 1 to 9, wherein the processor is configured to, based on the target instruction, index into a cache line of the micro-operations cache that includes the target instruction and the execution sequence.

11. The apparatus according to any of claims 1 to 10, wherein the processor includes a micro-operations cache, wherein the processor is configured to, based on the target instruction, index into a cache line of the micro-operations cache that includes the target instruction and the execution sequence.

12. The apparatus according to any of claims 1 to 11, wherein the processor includes a micro-operations cache, wherein the processor is configured to:
detect, during execution of the program, the branch instruction;
decode the branch instruction to obtain a set of micro-operations for the branch instruction;
store the set of micro-operations for the branch instruction in a first cache line of the micro-operations cache;
switch the program to the beginning of the execution sequence of the program based on the branch instruction; and
based on a determination that a cache line is not found in the micro-operations cache for the target instruction, decode the target instruction to obtain a set of micro-operations for the target instruction, allocate a second cache line of the micro-operations cache, and store the micro-operations for the target instruction in the second cache line of the micro-operations cache.

13. The apparatus according to any of claims 1 to 12, wherein the processor includes a micro-operations cache and an execution unit, wherein the processor is configured to:
initiate execution of the execution sequence from the beginning of the execution sequence with execution of the target instruction; and
based on a determination that the target instruction is associated with a cache line of the micro-operations cache, obtain a set of micro-operations for the execution sequence from the cache line and supply the set of micro-operations to the execution unit.

14. A method, comprising:
supporting, by a processor, execution of a program that is based on an instruction set architecture of the processor, wherein the program includes a target instruction configured to mark a beginning of an execution sequence of the program, wherein the target instruction is a target of a branch instruction of the program.

15. An apparatus, comprising:
a processor, wherein the processor is configured to:
detect, within a program that is based on an instruction set architecture of the processor, a branch instruction configured to point to a beginning of an execution sequence of the program; and
insert, within the program before the beginning of the execution sequence of the program based on the branch instruction, a target instruction configured to mark the beginning of the execution sequence of the program.
